# EUROPÄISCHE PATENTSCHRIFT

(11) **EP 0 905 921 B1**
(45) Veröffentlichungstag und Bekanntmachung des Hinweises auf die Patenterteilung: **18.10.2006**
(21) Anmeldenummer: 98115762.1
(22) Anmeldetag: 21.08.1998
(51) Int. Cl.: H04B 7/26

(54) **Ringspeicher für eine TDMA-Datenübertragungsstation**
Cyclic memory for a TDMA data transmission station
Mémoire cyclique pour une station de transmission de données à AMRT

(30) Priorität: 25.09.1997 DE 19742378
(43) Veröffentlichungstag der Anmeldung: 31.03.1999
(73) Patentinhaber: Infineon Technologies AG, 81669 München (DE)
(72) Erfinder: Kranz, Christian, 40885 Ratingen (DE); Boetzel, Ulrich, 41564 Kaarst (DE)
(74) Vertreter: Graf Lambsdorff, Matthias

(56) Entgegenhaltungen:
- EP-A- 0 615 396
- US-A- 5 598 438

## Beschreibung

Die Erfindung betrifft einen Ringspeicher für eine TDD-Datenübertragungsstation und eine TDD-Datenübertragungsstation mit einem Ringspeicher.

Ein Beispiel für ein TDD-Datenübertragungssystem (Time Division Multiple Access) ist das DECT-System (Digital Enhanced Cordless Telephone). In TDD-Systemen erfolgt eine Datenübertragung im Zeitmultiplex während sogenannter Zeitschlitze. Figur 3 zeigt die Zusammensetzung von während eines DECT-Zeitschlitzes übertragenen Daten. Der Zeitschlitz hat eine Länge von t_{SL} und weist ein S-Feld mit Synchronisierungsdaten, ein A-Feld mit Protokolldaten, ein B-Feld mit den eigentlichen Nutzerdaten sowie ein X- und ein Z-Feld auf, die der Fehlererkennung und -korrektur der übertragenen Daten dienen. Vierundzwanzig solcher Zeitschlitze bilden einen DECT-Rahmen, wobei je 12 aufeinanderfolgende Zeitschlitze des Rahmens für eine Datenübertragung in die eine Richtung und die übrigen zwölf für eine Datenübertragung in die andere Richtung vorgesehen sind.

Die im B-Feld übertragenen Nutzdaten sind bei einem DECT-Telefonsystem Sprachdaten eines Telefongesprächs. Die Sprachdaten fallen dabei während des Gesprächs kontinuierlich an. Die Übertragung dieser Daten erfolgt jedoch burstartig in einem Sendezeitschlitz. Daher ist in einer DECT-Datenübertragungsstation ein Zwischenspeicher notwendig zum Zwischenspeichern der kontinuierlich anfallenden Sendedaten, die erst mit dem nächsten Sendezeitschlitz übertragen werden. Ebenso ist ein weiterer Zwischenspeicher notwendig zum Zwischenspeichern von burstartig während eines Empfangszeitschlitzes empfangenen Daten des B-Feldes, die anschließend wieder kontinuierlich aus dem Zwischenspeicher ausgelesen und in akustische Signale umgewandelt werden. Die beiden Zwischenspeicher sind in der Regel als Ringspeicher ausgeführt und haben eine Speicherkapazität, die mit der Anzahl der Bytes eines B-Feldes übereinstimmt. Ein B-Feld weist 40 Byte auf, so daß bei herkömmlichen DECT-Systemen zwei Zwischenspeicher mit je 40 Byte Speicherkapazität vorhanden sind.

Die Druckschrift EP-A-0 615 396 beschreibt ein Verfahren und eine Vorrichtung für den Handover in einem drahtlosen DECT-System. In dieser Vorrichtung ist auch ein Ringspeicher enthalten, in welchem die von einer Übertragungsstation zu sendenden digitalen Sendedaten zwischengespeichert werden können.

Der Erfindung liegt die Aufgabe zugrunde, das Zwischenspeichern von burstartig übertragenen, jedoch kontinuierlich anfallenden bzw. zu verarbeitenden Daten bei einer TDD-Datenübertragungsstation mit möglichst geringem Aufwand zu ermöglichen.

Diese Aufgabe wird mit einem Ringspeicher gemäß Anspruch 1 sowie einer TDD-Datenübertragungsstation gemäß Anspruch 5 gelöst. Ausführungen und Weiterbildungen der Erfindung sind Gegenstand von abhängigen Ansprüchen.

Erfindungsgemäß ist ein einziger Ringspeicher vorgesehen, der sowohl zum Zwischenspeichern von in der TDD-Datenübertragungsstation während mehrerer Zeitschlitze anfallenden und während eines nachfolgenden Sendezeitschlitzes zu sendenden digitalen Sendedaten dient, als auch zum Zwischenspeichern von während eines Empfangszeitschlitzes von der Übertragungsstation empfangenen und von ihr in mehreren nachfolgenden Zeitschlitzen zu verarbeitenden digitalen Empfangsdaten dient.

Ein einzelner Ringspeicher zum Zwischenspeichern sowohl von Sende- als auch Empfangsdaten hat den Vorteil, daß der Aufbau der Übertragungsstation vereinfacht wird und der gesamte Speicherbedarf zum Speichern der Empfangs- und Sendedaten gegenüber dem Fall getrennter Zwischenspeicher sogar reduziert werden kann.

Nach einer Weiterbildung des erfindungsgemäßen Ringspeichers ist die Anzahl der während eines Sendezeitschlitzes zu sendenden Sendedaten ebenso groß wie die Anzahl der während eines Empfangszeitschlitzes durch die Übertragungsstation zu empfangenden Empfangsdaten, und die Speicherkapazität des Ringspeichers beträgt das 1,5fache dieser Anzahl.

Bei einer Ausführungsform der Erfindung ist der Ringspeicher für eine DECT-Datenübertragungsstation vorgesehen, bei dem die Sende- bzw. Empfangsdaten Nutzdaten von B-Feldern sind, die innerhalb je eines DECT-Zeitschlitzes übertragen werden. Wie bereits oben erwähnt, enthält ein B-Feld 40 Byte Nutzdaten. Der erfindungsgemäße Ringspeicher hat daher eine Speicherkapazität von lediglich 60 Byte statt der bei zwei getrennten Zwischenspeichern erforderlichen 80 Byte. Die Reduzierung des Speicherbedarfs des gemeinsamen Ringspeichers beruht auf der Erkenntnis, daß die Sende- bzw. Empfangsdaten zu unterschiedlichen Zeitpunkten übertragen werden und somit alle Bits eines B-Feldes für die Sendedaten nur während eines Sendezeitschlitzes und für die Empfangsdaten nur während eines Empfangszeitschlitzes zwischengespeichert werden müssen, während die jeweils andere Datenart zum selben Zeitpunkt maximal einen Speicherbedarf von 20 Byte hat.

Die erfindungsgemäße TDD-Datenübertragungsstation weist einen Ringspeicher der vorstehend genannten Art auf. Bei ihr erfolgt ein Wechsel des Sendezeitschlitzes unverzüglich nach einem Wechsel des Empfangszeitschlitzes, sofern nicht bereits ein Wechsel des Sendezeitschlitzes direkt vor dem Wechsel des Empfangszeitschlitzes erfolgt ist. Diese Maßnahme gewährleistet, daß auch bei der minimalen Speicherkapazität des Ringspeichers vom 1½-fachen der Anzahl der während eines Zeitschlitzes zu sendenden bzw. zu empfangenden Daten bei einem Zeitschlitzwechsel (Handover) keine Daten verloren gehen.

Die Erfindung wird im folgenden anhand der Figuren, die Ausführungsbeispiele der Erfindung zeigen, näher erläutert. Es zeigen:
- Figur 1: ein Ausführungsbeispiel einer erfindungsgemäßen DECT-Datenübertragungsstation,
- Figur 2: ein Ausführungsbeispiel des erfindungsgemäßen Ringspeichers, dessen Belegung zu vier verschiedenen Zeitpunkten dargestellt ist, und
- Figur 3: einen DECT-Zeitschlitz.

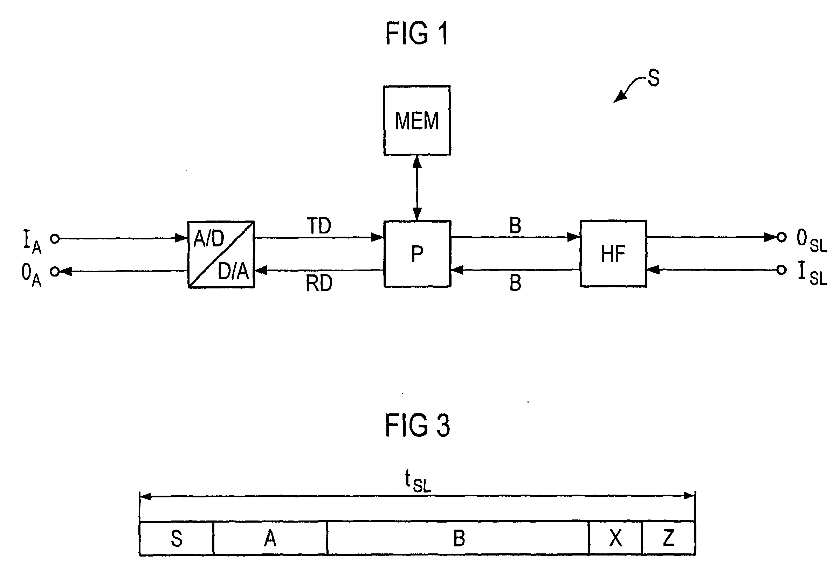

Figur 1 zeigt in einer Prinzipdarstellung diejenigen Komponenten einer DECT-Datenübertragungsstation S, die zum Verständnis der Erfindung erforderlich sind. An einem Analogeingang I_{A} fallen kontinuierlich Sprachdaten an. Diese werden durch einen A/D-Wandler digitalisiert und einem Prozessor P als digitale Sendedaten TD zugeleitet, der sie in einem Ringspeicher MEM zwischenspeichert. Die zwischenspeicherten Sendedaten TD werden während eines Sendezeitschlitzes vom Prozessor P aus dem Ringspeicher MEM wieder ausgelesen und in Form eines B-Feldes B des Sendezeitschlitzes an einen Transceiver HF weitergeleitet. Der Transceiver HF moduliert mit den Sendedaten TD eine hochfrequente Trägerfrequenz und gibt diese an einen Ausgang O_{SL}. Weiterhin werden während eines Empfangszeitschlitzes an einem Eingang I_{SL} des Transceivers HF in Form eines B-Feldes B eingetroffene Empfangsdaten RD vom Transceiver HF demoduliert und dem Prozessor P zugeleitet. Die Empfangsdaten RD werden vom Prozessor P ebenfalls im Ringspeicher MEM zwischengespeichert. Anschließend liest der Prozessor P die zwischengespeicherten Empfangsdaten aus dem Ringspeicher MEM kontinuierlich wieder aus und gibt sie über einen D/A-Wandler an einen analogen Sprachausgang O_{A}.

Bezüglich Figur 1 wurde nur die Erzeugung bzw. Verarbeitung eines B-Feldes von DECT-Sende- bzw. Empfangs-Zeitschlitzen erläutert. Die Erzeugung bzw. Verarbeitung der S-, A-, X- und Z-Felder erfolgt ebenso wie bei herkömmlichen DECT-Übertragungsstationen. Daher wird auf sie hier nicht eingegangen.

Die in Figur 1 dargestellte DECT-Datenübertragungsstation S kann z. B. ein DECT-Mobilteil oder eine DECT-Basisstation sein.

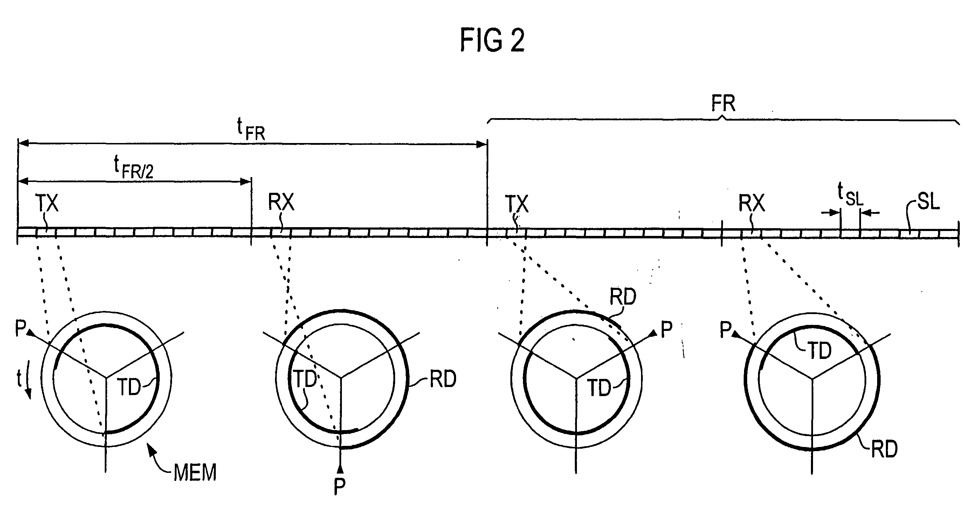

Anhand Figur 2 wird im folgenden die Funktionsweise des erfindungsgemäßen Ringspeichers MEM erklärt. Figur 2 zeigt im oberen Teil zwei aufeinanderfolgende DECT-Rahmen FR (DECT Frames). Jeder DECT-Rahmen FR hat eine Zeitdauer t_{FR} von 10ms. Er ist unterteilt in vierundzwanzig Zeitschlitze SL (Slots) mit einer Zeitdauer t_{SL} von jeweils 417µs. Im hier betrachteten Fall ist einer der ersten zwölf Zeitschlitze SL jedes Rahmens FR ein Sendezeitschlitz TX, während dem ein Senden von Sendedaten TD erfolgt. Einer der letzten zwölf Zeitschlitze SL jedes Rahmens FR ist ein Empfangszeitschlitz RX, während dem die Übertragungsstation S Empfangsdaten RD empfängt. Solange kein Wechsel des Zeitschlitzes erfolgt, ist der Sendezeitschlitz TX beim betrachteten Beispiel immer der jeweils zweite Zeitschlitz SL des Rahmens FR. Der Empfangszeitschlitz RX ist gegenüber dem Sendezeitschlitz TX grundsätzlich um eine halbe Rahmenlänge versetzt, es sei denn, es wird gerade ein Wechsel der Zeitschlitze vorgenommen.

Im unteren Teil der Figur 2 ist für die beiden Sendezeitschlitze TX und die beiden Empfangszeitschlitze RX der zwei dargestellten Rahmen FR jeweils die Speicherbelegung des Ringspeichers MEM dargestellt. Eingezeichnet ist jeweils ein Speicherzeiger P, der auf den jeweils aktuellen Speicherplatz des Speichers MEM zeigt. Der besseren Übersicht wegen wurden im Ringspeicher MEM zwischengespeicherte Sendedaten TD auf einem inneren Kreis und zwischengespeicherte Empfangsdaten RD auf einem äußeren Kreis dargestellt. Während des Betriebs des Ringspeichers MEM läuft der Zeiger P mit der Zeit t im Gegenuhrzeigersinn um. Ein Umlauf des Zeigers P um 360° in der Darstellung nach Figur 2 bedeutet, daß er sämtliche Speicherplätze des Ringspeichers MEM durchlaufen ist. Der Ringspeicher MEM hat eine Speicherkapazität von 60 Byte. Die drei jeweils in Winkel von 120° zueinander angeordneten Linien sind Hilfslinien, die einer besseren Orientierung beim Betrachten der Figur 2 dienen.

Im Ringspeicher MEM werden nur die Nutzdaten des B-Feldes des Empfangs- bzw. Sendezeitschlitzes TX zwischengespeichert. Sie enthalten die gesamte zu übertragende Sprachinformation. Dies sind pro B-Feld 40 Byte.

Im folgenden werden die vier dargestellten Zustände des Ringspeichers MEM aus Figur 2 einzeln erläutert. Die Darstellung des Ringspeichers MEM ganz links in Figur 2 zeigt seinen Zustand während des ersten Sendezeitschlitzes TX. Zu Beginn des Sendezeitschlitzes TX enthält der Ringspeicher MEM bereits 40 Byte während der letzten 10ms kontinuierlich vom Prozessor P in ihn eingeschriebenen Sendedaten TD. Dies sind die Daten, die rechts vom Zeiger P zwei Drittel des Ringspeichers MEM belegen. Während des betrachteten Sendezeitschlitzes TX werden diese Sendedaten TD vom Prozessor P aus dem Ringspeicher MEM ausgelesen und an den Transceiver HF zum Senden übergeben. Anschließend werden diese Sendedaten TD nicht mehr benötigt und können überschrieben werden. Am Ende des Sendezeitschlitzes TX sind jedoch nicht nur die 40 Byte Sendedaten TD aus dem Ringspeicher MEM ausgelesen, sondern es ist bereits ein Vierundzwanzigstel (¹/₂₄) der kontinuierlich anfallenden Sendedaten TD, die mit dem nächsten Sendezeitschlitz TX zu übertragen sind, durch den Prozessor P neu in den Ringspeicher MEM eingeschrieben worden. Das sind die (im Gegenuhrzeigersinn) vor dem Zeiger P eingezeichneten Sendedaten TD (der Zeiger P ist in Figur 2 immer in derjenigen Position dargestellt, die er bei Beginn des jeweils betrachteten Zeitschlitzes hat).

In der zweiten Darstellung von links in Figur 2 ist der Zustand des Ringspeichers MEM während des ersten Empfangszeitschlitzes RX dargestellt, der eine halbe Rahmenlänge nach dem Sendezeitschlitz TX folgt. Der Zeiger P ist inzwischen im Gegenuhrzeigersinn um 20 Byte weiter rotiert. Dabei wurden weitere Sendedaten TD, die inzwischen kontinuierlich angefallen sind, zwischengespeichert. Während des Empfangszeitschlitzes RX empfangene Empfangsdaten RD werden im Gegenuhrzeigersinn vor den Zeiger P in den Speicher MEM eingeschrieben. Auch diese belegen 40 Byte. Da eine Ausgabe der Empfangsdaten RD am Analogausgang O_{A} kontinuierlich erfolgt, werden die zuerst empfangenen und im Zwischenspeicher (MEM) zwischengespeicherten Empfangsdaten RD bereits noch während desselben Empfangszeitschlitzes RX wieder aus dem Speicher MEM ausgelesen. Der dadurch frei gewordene Speicherplatz wird sofort mit neu angefallenen Sendedaten TD belegt.

Bei der vorletzten Darstellung des Speichers MEM in Figur 2 hat der Zeiger P gegenüber der Ausgangsposition bereits zwei Drittel und damit 40 Byte des Speichers MEM zurückgelegt. Es wird der nächste Sendezeitschlitz TX betrachtet. Die nun im Speicher MEM enthaltenen 40 Byte Sendedaten TD werden wiederum zum Senden aus ihm ausgelesen. Die Sendedaten TD haben inzwischen im Speicher MEM die bereits aus diesem ausgelesenen Empfangsdaten RD überschrieben.

Die letzte Darstellung des Speichers MEM in Figur 2 ganz rechts gilt für den nächsten Empfangszeitschlitz RX, bei dem die eine halbe Rahmenlänge zuvor gesendeten Sendedaten TD mit neuen Empfangsdaten RD überschrieben werden, die während der nächsten 10ms für eine Sprachausgabe wieder aus dem Speicher MEM ausgelesen werden. Am Anfang des zuletzt betrachteten zweiten Empfangszeitschlitzes RX zeigt der Zeiger P wieder auf den ersten Speicherplatz des Ringspeichers MEM. Die Funktionsweise der Übertragungsstation S setzt sich in gleicher Weise fort, solange die Datenübertragung aufrechterhalten wird oder ein Wechsel der Übertragungszeitschlitze erfolgt.

Auf die beschriebene Weise ist es möglich, das Zwischenspeichern der B-Felder von Empfangszeitschlitzen und Sendezeitschlitzen in einem gemeinsamen Ringspeicher vorzunehmen. Obwohl jedes B-Feld eine Größe von 40 Byte hat, hat der gemeinsame Ringspeicher MEM eine Speicherkapazität von lediglich 60 Byte. Bei anderen Ausführungsbeispielen der Erfindung ist es auch möglich, daß der Ringspeicher MEM eine größere Speicherkapazität hat, so daß die zeitlichen Anforderungen an das Einschreiben und Auslesen aus diesem geringer sind. Das betrachtete Ausführungsbeispiel hat jedoch den Vorteil, daß für den Ringspeicher MEM nur ein einziger Speicherzeiger P benötigt wird, da bei einem Sendezeitschlitz TX jeweils die 40 Byte Sendedaten TD, die hinter der Position des Zeigers P gespeichert sind, aus dem Speicher MEM ausgelesen werden und während eines Empfangszeitschlitzes RX 40 Byte Empfangsdaten RD immer in die vor der Position des Zeigers P befindlichen Speicherplätze des Speichers MEM eingeschrieben werden. Die jeweils aktuellen, im Speicher MEM zwischenzuspeichernden, kontinuierlich anfallenden Sendedaten TD werden grundsätzlich in die Speicherplätze geschrieben, auf die der Zeiger P momentan zeigt.

Mit dem gemäß Figur 2 erläuterten Ringspeicher MEM der minimalen Speicherkapazität von 60 Byte ist auch ein Wechsel der Sendezeitschlitze TX vom jeweils zweiten Zeitschlitz SL und der Empfangszeitschlitze RX vom jeweils vierzehnten Zeitschlitz auf andere Zeitschlitze, die wiederum um je eine halbe Rahmenlänge gegeneinander versetzt sind, ohne Probleme möglich, wie leicht nachvollzogen werden kann. Eine Bedingung, die bei einem Wechsel der Zeitschlitze beachtet werden muß, ist, daß nach einem Wechsel des Empfangszeitschlitzes RX unverzüglich auch der Sendezeitschlitz TX gewechselt wird, wenn dieser Wechsel nicht bereits direkt vorher erfolgt ist. Das bedeutet, daß zwischen einem Empfangszeitschlitz RX und einem nachfolgenden Sendezeitschlitz TX grundsätzlich immer ein Abstand von genau einer halben Rahmenlänge eingehalten werden muß. Andernfalls kommt es zu Datenverlusten, da später noch benötigte, im Speicher MEM befindliche Daten durch andere Daten überschrieben werden.

## Patentansprüche

1. Ringspeicher (MEM) für eine TDD-Datenübertragungsstation (S) mit Mitteln zum Zwischenspeichern, welche
- zum Zwischenspeichern von in der Übertragungsstation (S) während mehrerer Zeitschlitze (SL) anfallenden und während eines nachfolgenden Sendezeitschlitzes (TX) zu sendenden digitalen Sendedaten (TD) ausgelegt sind,
**dadurch gekennzeichnet, daß**
- die Mittel zum Zwischenspeichern auch zum Zwischenspeichern von während eines Empfangszeitschlitzes (RX) von der Übertragungsstation (S) empfangenen und von ihr in mehreren nachfolgenden Zeitschlitzen (SL) zu verarbeitenden digitalen Empfangsdaten (RD)ausgelegt sind.

2. Ringspeicher nach Anspruch 1,
bei dem die Anzahl der während eines Sendezeitschlitzes (TX) zu sendenden Sendedaten (TD) ebenso groß ist wie die Anzahl der während eines Empfangszeitschlitzes (RX) zu empfangenden Empfangsdaten (RD) und die Speicherkapazität des Ringspeichers (MEM) dem 1,5fachen dieser Anzahl entspricht.

3. Ringspeicher nach Anspruch 2,
bei dem während eines Empfangszeitschlitzes (RX) im Ringspeicher (MEM) zwischengespeicherte Empfangsdaten (RD) in der Reihenfolge ihres Zwischenspeicherns durch in einem nachfolgenden Sendezeitschlitz (TX) zu sendende Sendedaten (TD) überschrieben werden.

4. Ringspeicher nach einem der vorstehenden Ansprüche
für eine DECT-Datenübertragungsstation, bei dem die Sende-(TD) bzw. Empfangsdaten (RD) Nutzdaten je eines B-Feldes (B) sind.

5. TDD-Datenübertragungsstation (S) mit einem Ringspeicher (MEM) nach einem der vorstehenden Ansprüche,
bei der nach einem Wechsel des Empfangszeitschlitzes (RX) unverzüglich ein Wechsel des Sendezeitschlitzes (TX) erfolgt, sofern ein solcher ihm nicht bereits direkt vorausgegangen ist.

## Claims

1. Circular buffer (MEM) for a TDD data transmission station (S) having means for temporary storage which are designed for temporarily storing
- digital transmit data (TD) occurring over a number of time slots (SL) in the transmission station (S) and to be transmitted during a subsequent transmit time slot (TX),
**characterized in that**
- the means for temporary storage are also designed for temporarily storing digital receive data (RD) received by the transmission station (S) during a receive time slot (RX) and to be processed by it in a number of subsequent time slots (SL).

2. Circular buffer according to claim 1, in which the number of transmit data (TD) to be transmitted during a transmit time slot (TX) is just as large as the number of receive data (RD) to be received during a receive time slot (RX) and the storage capacity of the circular buffer (MEM) corresponds to 1.5 times this number.

3. Circular buffer according to claim 2, in which receive data (RD) temporarily stored in the circular buffer (MEM) during a receive time slot (RX) are overwritten, in the order in which they have been temporarily stored, by transmit data (TD) to be transmitted in a subsequent transmit time slot (TX).

4. Circular buffer according to one of the preceding claims, for a DECT data transmission station in which the transmit data (TD) and, respectively, receive data (RD) are user data of in each case one B field (B).

5. TDD data transmission station (S) comprising a circular buffer (MEM) according to one of the preceding claims, in which a change of the receive time slot (RX) is immediately followed by a change of the transmit time slot (TX) unless it has already been preceded directly by such a one.

## Revendications

1. Mémoire (MEM) cyclique pour un poste (S) de transmission de données TDD comprenant des moyens de mémorisation intermédiaires, qui
- sont conçus pour mémoriser intermédiairement des données (TD) d'émission numériques à envoyer, se produisant dans le poste (S) de transmission pendant plusieurs créneaux (SL) temporels et pendant un créneau (TX) temporel d'émission suivant,
**caractérisée en ce que**
- les moyens de mémorisation intermédiaires sont conçus pour mémoriser aussi intermédiairement des données (RD) de réception numériques reçues pendant un créneau (RX) temporel de réception par le poste (S) de transmission et à traiter par lui dans plusieurs créneaux (SL) temporels suivants.

2. Mémoire cyclique suivant la revendication 1, dans laquelle le nombre des données (TD) d'émission à envoyer pendant un créneau (TX) temporel d'émission est aussi grand que le nombre des données (RD) de réception à recevoir pendant un créneau (RX) temporel de réception et la capacité de la mémoire (MEM) cyclique correspond à 1,5 fois ce nombre.

3. Mémoire cyclique suivant la revendication 2, dans laquelle des données (RD) mémorisées intermédiairement dans la mémoire (MEM) cyclique pendant un créneau (RX) temporel de réception sont écrasées dans l'ordre de leur mémorisation intermédiaire par des données (TD) d'émission à envoyer dans un créneau (TX) temporel d'émission venant ensuite.

4. Mémoire cyclique suivant l'une des revendications précédentes pour un poste de transmission de données DECT,
dans lequel les données (TD) d'émission ou les données (RD) de réception sont des données utiles de respectivement un champ B (B).

5. Poste (S) de transmission de données TDD ayant une mémoire (MEM) cyclique suivant l'une des revendications précédentes, dans lequel, après un changement du créneau (RX) temporel de réception, il s'effectue sans délai un changement du créneau (TX) temporel d'émission dans la mesure où un tel changement ne l'a pas déjà directement précédé.
